# EUROPEAN PATENT APPLICATION

(11) **EP 4 597 304 A1**
(43) Date of publication of application: **06.08.2025**
(21) Application number: 24155068.0
(22) Date of filing: 31.01.2024
(51) Int. Cl.: G06F 8/41, G06F 8/30

(54) **METHOD AND SYSTEM FOR OPTIMIZING ENGINEERING PROGRAMS FOR A CONTROLLER DEVICE IN AN INDUSTRIAL PLANT**

(71) Applicant: Siemens Aktiengesellschaft, 80333 München (DE)
(72) Inventor: BISHWAL, Manoj, 560100 Bengaluru (IN); KUMAR, Rajesh, 560078 Bangalore (IN); SUMAN, Shantanu, 560068 Bengaluru (IN)
(74) Representative: Isarpatent

(57) **Abstract**

The present invention discloses a method for optimizing engineering programs for controller devices within industrial plants. The method comprises reception of an engineering program associated with the industrial plant. The method furtehr comprises determination of a first value for a memory efficiency parameter associated with the engineering program. The method further comprises changing a datatype of at least one variable of the plurality of variables from at least one first datatype to at least one second datatype. The method further comprises determining a second value for the memory efficiency parameter associated with the modified engineering program. The method further comprises deploying the modified engineering program to a controller device of the industrial plant based on the first value and the second value of the efficiency parameter.

## Description

The present invention relates to a field of engineering of computer assisted programming, and more particularly relates to a method and system for optimizing engineering programs for controller device in an industrial plant.

Engineering programs, especially those implemented in the context of control systems like Programmable Logic Controllers (PLCs), are becoming increasingly complex due to growing demands of modern industrial processes. The engineering programs often involve a myriad of variables, each associated with specific datatypes that dictate a bit size and a range of values they can accommodate. A challenge arises in efficiently assigning datatypes to the variables to strike a balance between memory utilization and computational performance.

The engineering programs typically comprise a large number of variables, some of which are utilized in arrays and linked lists. The variables are assigned specific datatypes, but mismatches between a bitsize of the datatype and a range of values used by the variable often lead to suboptimal outcomes.

In one scenario, the bitsize of the assigned datatype is insufficient to represent the full range of values required by the variable. This results in program crashes during execution, leading to operational failures. On the other hand, if the bitsize is excessive for the range of values needed, it leads to memory wastage, impacting overall system efficiency.

Traditionally, the assignment of appropriate datatypes to variables is a manual process that demands a high level of expertise and attention to detail. Engineers responsible for programming systems must meticulously analyze the range of values each variable can take and choose an appropriate datatype. This process is not only time-consuming but also prone to errors, as human judgment may falter when dealing with a multitude of variables and complex program structures.

The pressing need for a solution becomes evident when considering the extensive human effort required for datatype assignment and the potential for errors. The current state of affairs not only poses a risk to the reliability of engineering programs but also results in significant wastage of labor resources. Therefore, there is a critical demand for an automated system that optimizes the assignment of datatypes to variables, ensuring both memory efficiency and program robustness.

Therefore, it is an object of the present invention to provide a method and system for optimizing engineering programs for a controller device in an industrial plant.

The object of the invention is achieved by a method of optimizing engineering programs for a controller device in an industrial plant. The method comprises receiving, by a processing unit, an engineering program associated with the industrial plant. The engineering program comprises a plurality of variables. The engineering program is received from one of a user or a database.

The engineering program, as referred herein, is a set of instructions encoded in a machine-readable format. The engineering program is composed in a plurality of programming languages such as IECPL, Structured Text and Ladder Logic for industrial control systems, C/C++ and Python for versatile system-level programming, and MATLAB/Simulink for numerical computing and simulation. Additionally, the plurality of programming languages comprises Java, LabVIEW, Fortran, and Assembly Language find applications across diverse engineering fields, with language selection driven by factors such as performance needs, and hardware requirements.

The engineering program is designed to be executed on a controller device, such as a Programmable Logic Controller (PLC). The engineering program comprises a plurality of code statements that facilitate control and automation of one or more industrial processes within the industrial plant. The engineering program further comprises a plurality of variables. Each of the plurality of variables are associated with a specific datatype of a plurality of datatypes. Examples of the plurality of datatypes include but is not limited to integers, floating-point numbers, characters, and Boolean values. A proper assignment of the plurality of datatypes to the plurality of variables is crucial for efficient memory utilization. Inappropriately assigned datatypes may result in the wastage of memory resources, leading to suboptimal performance and increased operational costs.

For instance, when employing looped statements to create linked lists within the engineering program, a careful assignment of datatypes becomes paramount. If datatypes within the linked list are poorly assigned, generation of each item in the linked list can compound memory inefficiency. The aforementioned problem particularly evident in large-scale systems where memory resources are at a premium. As an illustrative example, if the datatypes within a linked list are not appropriately matched, creation of each new item in the list may result in unnecessary memory overhead, leading to a significant impact on system efficiency.

In a preferred embodiment of the present invention, the method comprises generating, by the processing unit, an abstract syntax tree by implementation of a tree generation procedure on the received engineering program.

The abstract syntax tree as referred to herein is a hierarchical data structure utilized for representing a syntactic structure of source code in the engineering program. The abstract syntax tree serves as an intermediate representation facilitating code analysis and manipulation.

In one example, the abstract Syntax Tree (AST) comprises a plurality of node objects. The plurality of node objects comprises fundamental building blocks of the AST. Each node object in the AST represents each element within the AST. Each node object encapsulates information such as a node type, a node value, and one or more references to one or more children nodes. The AST further comprises information associated with the plurality of variables, and a plurality of datatypes associated with the plurality of variables. Finally, an over-arching AST object acts as a root object of the AST. The root object contains metadata associated with the engineering program. Together, these data objects contribute to the effective modeling of the AST for the engineering program.

To implement the tree generation procedure, the processing unit is configured to execute a first set of steps. In a first step of the first set of steps, the processing unit is configured to tokenize the engineering program into a plurality of tokens. A token is a smallest unit of the engineering program. The plurality of tokens comprises keywords, identifiers, operators, literals, and variables. The processing unit is configured to apply a tokenizer algorithm or a lexer algorithm to generate the plurality of tokens from the engineering program. The examples of tokenizer algorithms include finite automata based tokenization algorithms. Examples of the lexer algorithms comprises a fast lexical analyzer generator algorithm, and another tool for language recognition (ANTLR) based algorithms.

In a second step of the first set of steps, the processing unit is configured to parse the plurality of tokens to generate a parse tree. The processing unit is configured to generate the parse tree by application of a parsing algorithm on the plurality of tokens. Examples of the parsing algorithm includes but is not limited to a Recursive Descent Parsing algorithm, a LL(k) parsing algorithm, and a LR(k) parsing algorithm.

The parse tree, as referred herein, is a hierarchical representation of a syntactic structure of the engineering program. The parse tree serves as a visual representation of how the plurality of tokens are arranged based on one or more grammatical rules of the engineering program.

The parse tree comprises a plurality of elements which are organized hierarchically. Each element of the parse tree corresponds to at least one token of the plurality of tokens. A root data element of the parse tree represents the engineering program. Other data elements of the parse tree comprises information associated with other information such as syntactic constructs, such as a plurality of expressions, a plurality of statements, or a plurality of declarations of the engineering program. The parse tree further comprises information associated with a plurality of symbols in the engineering program, including keywords, identifiers, and literals of the engineering program.

In a third step of the first set of steps, the processing unit is configured to convert the parse tree into the abstract syntax tree. In one example, the processing unit is configured to generate the abstract syntax tree by application of a tree traversal algorithm on the parse tree. The tree traversal algorithm is configured to traverse through the plurality of elements of the parse trees and generate corresponding node objects of the abstract syntax tree.

In the preferred embodiment, the method further comprises determining a first value for a memory efficiency parameter associated with the engineering program by implementation of an efficiency determination procedure on the received engineering program.

The memory efficiency parameter as referred herein is a metric associated with the engineering program. The memory efficiency parameter gauges an optimal utilization of memory resources by assessing a degree of alignment between a bit size of data types assigned to the plurality of variables and an actual range of values which each of the plurality of variables are intended to handle. In one example, the processing unit is configured to receive from one or more databases, information associated with the actual range of values which are intended to be handled by each variable of the plurality of variables.

To implement the efficiency determination procedure, the processing unit is configured to execute a second set of steps. In a first step of the second set of steps, the processing unit is configured to extract from the abstract syntax tree, information associated with a datatype of each variable of the plurality of variables of the engineering program. Examples of the plurality of datatypes include but is not limited to an INT datatype, a FLOAT datatype, a SINT datatype and a DINT datatype. Each node object of the plurality of node objects comprises information associated with datatype of one or more variables of the plurality of variables.

In a second step of the second set of steps, the processing unit is configured to determine information associated with a range of values handled by each variable of the plurality of variables. The information associated with a range of values handled by each variable of the plurality of variables is stored in a mapping table in a database. The processing unit is configured to receive the information associated with the range of values handled by each variable of the plurality of variables from the database. Each variable is associate with a specific range of values in the mapping table. For example, in the mapping table, a first variable associated with age is mapped to a first range of 0 to 100. A second variable associated with a room temperature is mapped to a second range of -50 to +50. A third variable associated with a number of passengers in a car is mapped to a third range of 0 to 8. Thus, the first variable handles values between 0 and 100. The second variable handles values between -50 and 50. The third variable handles values between 0 and 8. The processing unit is further configured to determine a bitsize of a datatype assigned to each variable of the plurality of variables. The processing unit is configured to receive the bitsize of the datatype from the database.

In a third step of the second set of steps, the processing unit is configured to determine a degree of alignment between the datatype associated with each variable of the plurality of variables and the range of values associated with the variable. In one example, the processing unit is configured to receive, from the database, information associated with the number of bits required to represent all values in the range of values. To determine the degree of alignment, the processing unit is configured to compare the bitsize of the datatype of the variable with the number of bits required to represent all values in the range of values associated with the variable. If the bitsize of the datatype of the variable is equal to the range of values associated with the variable, then the datatype assigned to the variable is aligned with the range of values of the variable.

In one example, a variable of the engineering program is designated to accommodate a range of values from 0 to 31. In a case where the variable is assigned a first data type with a bit size of 32, then a degree of alignment between the bit size of the first datatype and the designated range of values is low. This is because only 5 bits suffice to accommodate values ranging from 0 to 31. Consequently, a presence of the variable in the engineering program causes the memory efficiency parameter of the engineering program to decrease. Conversely, if the variable, meant for values from 0 to 31, is assigned a second data type with a bit size of 5, then a degree of alignment between the second datatype and the designated range of values, is high. Thus, a presence of the variable in the engineering program causes the memory efficiency parameter of the engineering program to increase. In this scenario, the memory efficiency parameter attains a high value, signifying an optimal match between the variable's intended range and the allocated bit size, contributing to enhanced memory utilization within the engineering program. Thus, in other words, the memory efficiency parameter is indicative of a degree of alignment between a plurality of datatypes of the plurality of variables and a range of values handled by each variable of the plurality of variables.

In a fourth step of the second set of steps, the processing unit is configured to apply a machine learning model based algorithm on a dataset comprising the generated abstract syntax tree and a determined degree of alignment between a datatype of each variable of the plurality of variables and a range of values handled by the variable. The machine learning model based algorithm is applied to determine a first value of the memory efficiency parameter of the engineering program. The machine learning model based algorithm is configured to determine the memory efficiency parameter associated with the engineering program.

In one example, the machine learning model based algorithm uses an interpretable machine learning model which uses a local interpretable model-agnostic explanation technique to explain a plurality of predictions of the interpretable machine learning model. The interpretable machine learning model is configured to determine the memory efficiency parameter of the engineering program. Examples of the interpretable machine learning model include but is not limited to a regression model, a support vector machine, a random forest machine learning model, and a long term short term memory model.

The interpretable machine learning model is trained by application of a supervised learning algorithm on a training dataset. The training dataset comprises a plurality of data items and a plurality of labels associated with the plurality of data items. The plurality of data items comprises information associated with a plurality of variables, and a plurality of datatypes associated with each variable of the plurality of variables. Furthermore, the training dataset comprises a plurality of range of values associated with each variable of the plurality of variables. The plurality of data items further comprises information associated with a plurality of engineering programs. The plurality of engineering programs comprises information associated with domain expert reviewed engineering programs. The information associated with the plurality of engineering programs comprises a plurality of abstract syntax trees generated from the plurality of engineering programs.

Domain expert-reviewed engineering programs refer to software code and algorithms which have undergone thorough scrutiny and evaluation by a plurality of professionals who have with specialized knowledge in one or more industrial domains. In the context of training the interpretable machine learning model, the plurality of professionals play a crucial role in ensuring a quality and an accuracy of the training dataset. The plurality of professionals perform careful examination of datatypes assigned to the plurality of variables and a range of values handled by the plurality of variables. By leveraging their expertise, the plurality of professionals contribute to the creation of a robust and comprehensive dataset that enables the interpretable machine learning modes to learn patterns associated with memory efficiency in the plurality of engineering programs.

The plurality of labels comprises information associated a degree of alignment of each variable of the plurality of variables and a datatype assigned to the specific variable. Furthermore, the plurality of labels comprises information associated with a plurality of value of the memory efficiency parameter associated with each engineering program of the plurality of engineering programs. Thus, the interpretable machine learning model is trained by application of the supervised learning algorithm on the training dataset. Thus, the machine learning model is configured to determine the first value for the memory efficiency parameter associated with the engineering program. Furthermore, the machine learning model based algorithm is configured to determine the memory efficiency parameter associated with the engineering program by processing the abstract syntax tree associated with the engineering program.

In a fifth step of the second set of steps, a first value of the memory efficiency parameter associated with the engineering program is determined by the processing unit based on the application of the machine learning model based algorithm on the generated abstract syntax tree and further based on the determined degree of alignment between the datatype of each variable of the plurality of variables of the engineering program and a range of values handled by the variable. In one example, the first value of the memory efficiency parameter is represented as a numerical value between 1 to 10. In another example, the memory efficiency parameter is represented as a Boolean number such as 1 or 0. In such a case, if the memory efficiency parameter is 0, then the engineering program is inefficient. If the memory efficiency parameter is 1, then the engineering program is efficient. The first value, of the memory efficiency parameter of the engineering program, is indicative of a degree of alignment between a datatype of each variable of the plurality of variables of the engineering program and a range of values handled by the variable.

In the preferred embodiment, the method further comprises modifying the engineering program by changing a datatype of at least one variable from a at least first datatype to at least a second datatype by implementing a memory optimization procedure on the plurality of variables. To implement the memory optimization procedure on the plurality of variables, the processing unit is configured to execute a third set of steps.

In a first step of the third set of steps, the processing unit assigns each datatype, of a set of datatypes, to each variable of the plurality of variables. The set of datatypes comprises datatypes which are compatible with syntactic and semantic rules of the engineering program. The set of datatypes are selected and assorted by one or more domain experts.

In a second step of the third set of steps, the processing unit generates a plurality of versions of the engineering program by changing at least one datatype of one or more variables of the plurality of variables. Thus, each version of the plurality of versions of the engineering program differ from other versions by a datatype associated with one or more variables in the engineering program.

In a third step of the third set of steps, the processing unit generates a plurality of values of the memory efficiency parameter for the plurality of versions of the plurality of engineering programs. In other words, each value of the plurality of values of the memory efficiency parameter is determined based on a version of the engineering program in which a specific datatype is assigned to a specific variable of the plurality of variables.

In a fourth step of the third set of steps, the processing unit generates a dataset which comprises a mapping between each version of the plurality of versions of the engineering program to one or more values of the plurality of values of the memory efficiency parameter. Thus, the processing unit is configured to determine interrelationships between the plurality of values of the memory efficiency parameter, the plurality of variables of the engineering program, and the set of datatypes assigned to the plurality of variables. In other words, the processing unit determines one or more variations which occur in the memory efficiency parameters of the engineering program, when a specific datatype of the set of datatypes is assigned to a specific variable of the plurality of variables of the engineering program.

In a fifth step of the third set of steps, the processing unit determines a weightage for each variable of the plurality of variables based on the determined one or more variations in the plurality of values for the memory efficiency parameters, when different datatypes are assigned to the variable. The weightage assigned to each variable of the plurality of variables is indicative of an amount of variation in the memory efficiency parameter of the engineering program, when a datatype of the variable is changed. Thus, if the determined weightage for the variable is high, then the memory efficiency parameter of the engineering program varies rapidly with change in the datatype of the variable. Thus, if the determined weightage for the variable is low, then the memory efficiency parameter of the engineering program does not vary with change in the datatype of the variable. In one example, the weightage is assigned to the variable based on application of a standard deviation determination operation on the plurality of values of the memory efficiency parameter of the plurality of versions of the engineering program. For example, the weightage of the variable is proportional to a standard deviation of the plurality of values of the memory efficiecy parameter for a set of versions of the engineering program in which the variable is modified.

In a sixth step of the third set of steps, the processing unit generates a plurality of weights for the plurality of variables by determining a weightage for each variable of the plurality of variables. In one example, the processing unit is configured to rank the plurality of variables in an order of increasing weightages of the plurality of weightages.

In a seventh step of the third set of steps, the processing unit is configured to determine at least one variable from the plurality of variables based on a weightage associated with the at least one variable. For example, the processing unit is configured to determine the at least one variable which has a highest value of weightage from the plurality of weightages. Thus, the at least one variable is a variable which has a maximum impact on the memory efficiency parameter associated with the engineering program, when a datatype associated with the variable is changed. In one example, the selected at least one variable comprises a set of variables of the plurality of variables, which have a maximum impact on the memory efficiency parameter of the engineering program, when a datatype associated with each of the set of variables is changed.

In a eighth step of the third set of steps, the processing unit is configured to determine at least one first datatype of the at least one variable from the abstract syntax tree.

In a ninth step of the third set of steps, the processing unit is configured to determine, a range of values handled by the at least one variable by analyzing the abstract syntax tree of the engineering program.

In a tenth step of the third set of steps, the processing unit is configured to select from the set of datatypes, at least a second datatype. In one example, the at least one second datatype is selected based on a user input received from a user. In another example, the at least one second datatype is selected based on the plurality of values of the memory efficiency parameter. For example, the at least one second datatype is selected based on a value of the memory efficiency parameter of a version of the engineering program in which the at least one second datatype is assigned to the at least one variable of the plurality of variables. In one example, the value of the memory efficiency parameter of the version of the engineering program may be greater than a specific user defined threshold. In other words, assignment of the at least one second datatype to the at least one variable may increase the memory efficiency parameter above the specific user defined threshold.

In a eleventh step of the third set of steps, the processing unit is configured to determine a bit size of the at least one second datatype. Furthermore, the processing unit is configured to compare the bit size of the at least one second datatype with a number of bits required to represent the range of values handled by the at least one variable. The processing unit is further configured to compare the bit size of the at least one second data type and the number of bits required to represent the range of values handled by the at least one variable.

In a twelveth step of the third set of steps, the processing unit is configured to determine a degree of alignment of the at least one second datatype with the range of values associated with the at least one variable based on the comparison.

In a thirteenth step of the third set of steps, the processing unit is configured to determine a degree of alignment between the at least one first datatype and the range of values associated with the at least one variable.

In an fourteenth step of the third set of steps, the processing unit is configured to determine whether the degree of alignment of the second datatype with a range of values associated with the at least one variable, is greater than a degree of alignment of the at least first datatype with the range of values associated with the at least one variable.

In a case where the degree of alignment of the at least one second datatype is determined to be greater than the degree of alignment of the at least one first datatype, then, at a fifteenth step of the third set of steps, the datatype of the at least one variable is changed from the at least one first datatype to the at least one second datatype.

In a case where the degree of alignment of the at least one second datatype is not determined to be greater than the degree of alignment of the at least one first datatype, then, at the fifteenth step of the third set of steps, the datatype of the at least one variable is not changed from the at least one first datatype to the at least one second datatype.

In a sixteenth step of the third set of steps, the engineering program is modified based on the change of the datatype of the at least one variable from the at least one first datatype to the at least one second datatype.

In the preferred embodiment, the method further comprises determining, by the processing unit, a second value for the memory efficiency parameter of the modified engineering program by implementation of the efficiency determination procedure on the modified engineering program. In one example, the second value of the memory efficiency parameter is determined by application of the machine learning model based algorithm on an abstract syntax tree of the modified engineering program.

In yet another preferred embodiment, the method comprises generating, by the processing unit, a simulation instance for a simulated execution of the modified engineering program in the controller device in the industrial plant. In one example, the simulation instance is a digital twin of the controller device in the industrial plant. The method further comprises simulating, by the processing unit, execution of the modified engineering program in the controller device in a simulation environment by executing the modified engineering progam on the generated simulation instance. The method further comprises determining, by the processing unit that the modified engineering program is valid, based on a result of the simulated execution of the modified engineering program. Further, the method comprises deploying, by the processing unit, the modified engineering program in real-time onto the controller device, based on a determination that the generated engineering program is valid. Advantageously, the modified engineering program is only deployed onto controller device after the determination that the generated engineering program is valid. Further, the method comprises displaying, by the processing unit, the modified engineering program on a display device. Advantageously, the user is enabled to document the generated engineering program.

In yet another preferred embodiment, the method comprises notifying, by the processing unit, about an invalidity of the modified engineering program, based on a determination that the modified engineering program is invalid. Advantageously, the user is informed that the modified engineering program is invalid. Thus, the user is enabled to correct and troubleshoot the engineering program. The method further comprises generating, by the processing unit, a plurality of error log files associated with the modified engineering program, based on the determination that the generated engineering program is valid. The plurality of error log files comprises a plurality of errors in the generated engineering programs. The plurality of errors are identified during the simulated execution of the modified engineering program. The method further comprises displaying, by the processing unit, the generated plurality of error log files on a display device.

In the preferred embodiment, the method further comprises generating a plurality of user recommendations to modify the engineering program. The plurality of user recommendations are generated based on the plurality of weightages determined for the plurality of variables. In one example, the plurality of user recommendations are indicative of one or more variables which may be changed to improve the memory efficiency parameter of the engineering program. The method further comprises displaying the plurality of use recommendations to a user.

The object of the present invention is also achieved by an engineering system for optimizing engineering programs for a controller device in an industrial plant. The engineering system comprises one or more processor(s) and a memory coupled to the processor. The memory comprises an automation module stored in the form of machine-readable instructions executable by the processor. The automation module is configured for performing the method as described above.

The object of the present invention is also achieved by an industrial environment. The industrial environment comprising an engineering system, a industrial plant comprising one or more physical components and one or more client devices communicatively coupled to the engineering system and the industrial plant. The engineering system is configured to perform the above described method steps.

The object of the present invention is also achieved by a computer-program product having machine-readable instructions stored therein, that when executed by one or more processor(s), cause the one or more processor(s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an industrial environment capable of optimizing engineering programs for controller devices, according to an embodiment of the present invention;
- FIG 2: is a block diagram of an engineering system, such as those shown in FIG. 1, in which an embodiment of the present invention can be implemented;
- FIG 3: is a block diagram of an automation module, such as those shown in FIG 2, in which an embodiment of the present invention can be implemented; and
- FIG 4: is a process flowchart illustrating an exemplary method of optimizing engineering programs for a controller device in an industrial plant, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

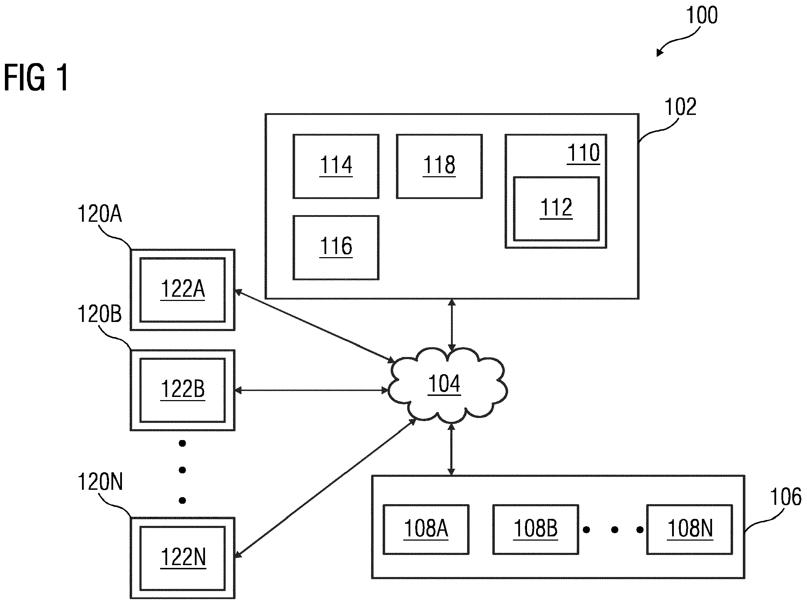

FIG 1 is a block diagram of an industrial environment 100 capable of optimizing engineering programs for a controller device, according to an embodiment of the present invention. In FIG 1, the industrial environment 100 includes an engineering system 102, a industrial plant 106 and one or more client devices 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The engineering system 102 is communicatively connected to the industrial plant 106 via the network 104 (such as Local Area Network (LAN), Wide Area Network (WAN), Wi-Fi, Internet, any short range or wide range communication). The engineering system 102 is also connected to the one or more client devices 120A-N via the network 104.

The engineering system 102 is connected to one or more engineering objects 108A-N in the industrial plant 106 via the network 104. The one or more engineering objects 108A-N may include servers, robots, switches, automation devices, programmable logic controllers (PLC)s, human machine interfaces (HMIs), motors, valves, pumps, actuators, sensors and other industrial equipment(s). The one or more engineering objects 108A-N may be connected to each other or several other components (not shown in FIG 1) via physical connections. The physical connections may be through wiring between the one or more engineering objects 108A-N. Alternatively, the one or more engineering objects 108A-N may also be connected via non-physical connections (such as Internet of Things (IOT)) and 5G networks. Although, FIG 1 illustrates the engineering system 102 connected to one industrial plant 106, one skilled in the art can envision that the engineering system 102 can be connected to several industrial plants 106 located at different geographical locations via the network 104.

The client devices 120A-N may be a desktop computer, laptop computer, tablet, smart phone and the like. Each of the client devices 120A-N is provided with an engineering tool 122AN for generating and/or editing engineering programs respectively. The client devices 120A-N can access the engineering system 102 for automatically generating engineering programs. The client devices 120A-N can access cloud applications (such as providing performance visualization of the one or more engineering objects 108A-N via a web browser). Throughout the specification, the terms "client device" and "user device" are used interchangeably.

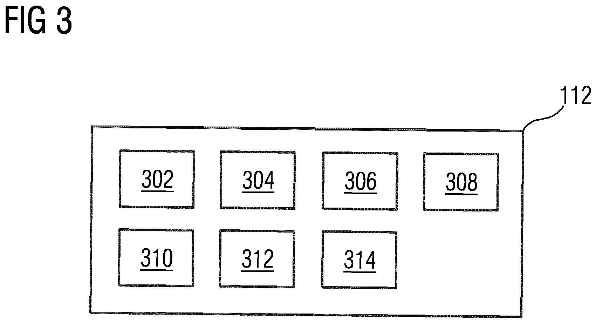

The engineering system 102 may be a standalone server deployed at a control station or may be a remote server on a cloud computing platform. In a preferred embodiment, the engineering system 102 may be a cloud-based engineering system. The engineering system 102 is capable of delivering applications (such as cloud applications) for managing a industrial plant 106 comprising one or more engineering objects 108A-N. The engineering system 102 may comprise a platform 110(such as a cloud computing platform), an automation module 112, a server 114 including hardware resources and an operating system (OS), a network interface 116 and a database 118. The network interface 116 enables communication between the engineering system 102, the industrial plant 106, and the client device(s) 120A-N. The interface (such as cloud interface)(not shown in FIG 1) may allow the engineers at the one or more client device(s) 120A-N to access engineering project files stored at the engineering system 102 and perform one or more actions on the engineering project files as same instance. The server 114 may include one or more servers on which the OS is installed. The servers 114 may comprise one or more processors, one or more storage devices, such as, memory units, for storing data and machine-readable instructions for example, applications and application programming interfaces (APIs), and other peripherals required for providing computing (such as cloud computing) functionality. The platform 110 enables functionalities such as data reception, data processing, data rendering, data communication, etc. using the hardware resources and the OS of the servers 114 and delivers the aforementioned services using the application programming interfaces deployed therein. The platform 110 may comprise a combination of dedicated hardware and software built on top of the hardware and the OS. In an exemplary embodiment, the platform 110 may correspond to an Integrated Development Environment (IDE) comprising program editors and compilers which allow the users of the client devices 120A-N to generate engineering programs. The platform 110 may further comprise an automation module 112 configured for generating engineering programs. Details of the automation module 112 is explained in FIG. 3.

The database 118 stores the information relating to the industrial plant 106 and the client device(s) 120A-N. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the platform 110. The database 118, according to another embodiment of the present invention, is a location on a file system directly accessible by the automation module 112. The database 118 is configured to store engineering project files, engineering programs, object behavior model, parameter values associated with the one or more engineering objects 108A-N, test results, simulation results, status messages, one or more simulation instances, graphical programs, program logics, program logic patterns, engineering objects 108A-N and engineering object properties, one or more engineering object blocks, relationship information between the engineering objects, requirements, program update messages and the like. The database 118 further comprises information associated with a plurality of variables, and a plurality of datatypes. Information associated with the plurality of variables comprises a name and a range of values handled by each variable of the plurality of variables. Information associated with the plurality of variables further comprises a range of values which is intended to be handled by each variable of the plurality of variables.

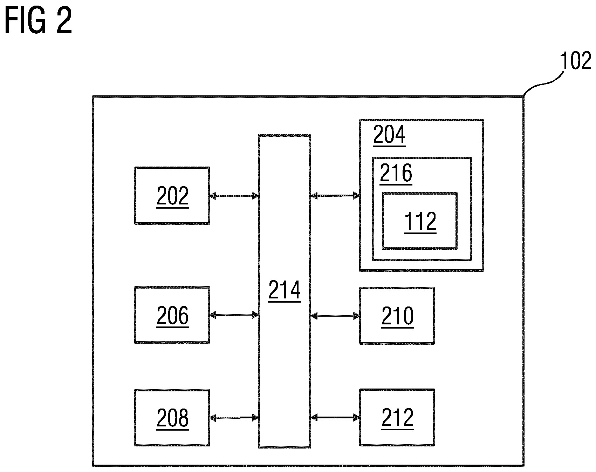

FIG 2 is a block diagram of an engineering system 102, such as those shown in FIG 1, in which an embodiment of the present invention can be implemented. In FIG 2, the engineering system 102 includes a processor(s) 202, an accessible memory 204, a storage unit 206, a communication interface 208, an input-output unit 210, a network interface 212 and a bus 214. The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor(s) 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processor (s) 202, such as being a computer-readable storage medium. The processor(s) 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes an automation module 112 stored in the form of machine-readable instructions on any of the above-mentioned storage media and may be in communication with and executed by the processor(s) 202.

When executed by the processing unit 202, the automation module 112 causes the processing unit 202 to receive an engineering program associated with the industrial plant 106. The engineering program comprises a plurality of variables. The engineering program is received from one of a user or a database.

The engineering program, as referred herein, is a set of instructions encoded in a machine-readable format. The engineering program is composed in a plurality of programming languages such as IECPL, Structured Text and Ladder Logic for industrial control systems, C/C++ and Python for versatile system-level programming, and MATLAB/Simulink for numerical computing and simulation. Additionally, the plurality of programming languages comprises Java, LabVIEW, Fortran, and Assembly Language find applications across diverse engineering fields, with language selection driven by factors such as performance needs, and hardware requirements.

The engineering program is designed to be executed on a controller device, such as a Programmable Logic Controller (PLC). The engineering program comprises a plurality of code statements that facilitate control and automation of one or more industrial processes within the industrial plant 106. The engineering program further comprises a plurality of variables. Each of the plurality of variables are associated with a specific datatype of a plurality of datatypes. Examples of the plurality of datatypes include but is not limited to integers, floating-point numbers, characters, and Boolean values. A proper assignment of the plurality of datatypes to the plurality of variables is crucial for efficient memory utilization. Inappropriately assigned datatypes may result in the wastage of memory resources, leading to suboptimal performance and increased operational costs.

For instance, when employing looped statements to create linked lists within the engineering program, a careful assignment of datatypes becomes paramount. If datatypes within the linked list are poorly assigned, generation of each item in the linked list can compound memory inefficiency. The aforementioned problem particularly evident in large-scale systems where memory resources are at a premium. As an illustrative example, if the datatypes within a linked list are not appropriately matched, creation of each new item in the list may result in unnecessary memory overhead, leading to a significant impact on system efficiency.

The automation module 112 causes the processing unit 202 to generate an abstract syntax tree by implementation of a tree generation procedure on the received engineering program.

The abstract syntax tree as referred to herein is a hierarchical data structure utilized for representing a syntactic structure of source code in the engineering program. The abstract syntax tree serves as an intermediate representation facilitating code analysis and manipulation.

In one example, the abstract Syntax Tree (AST) comprises a plurality of node objects. The plurality of node objects comprises fundamental building blocks of the AST. Each node object in the AST represents each element within the AST. Each node object encapsulates information such as a node type, a node value, and one or more references to one or more children nodes. The AST further comprises information associated with the plurality of variables, and a plurality of datatypes associated with the plurality of variables. Finally, an overarching AST object acts as a root object of the AST. The root object contains metadata associated with the engineering program. Together, these data objects contribute to the effective modeling of the AST for the engineering program.

To implement the tree generation procedure, the processing unit 202 is configured to execute a first set of steps. In a first step of the first set of steps, the processing unit 202 is configured to tokenize the engineering program into a plurality of tokens. A token is a smallest unit of the engineering program. The plurality of tokens comprises keywords, identifiers, operators, literals, and variables. The processing unit 202 is configured to apply a tokenizer algorithm or a lexer algorithm to generate the plurality of tokens from the engineering program. The examples of tokenizer algorithms include finite automata based tokenization algorithms. Examples of the lexer algorithms comprises a fast lexical analyzer generator algorithm, and another tool for language recognition (ANTLR) based algorithms.

In a second step of the first set of steps, the processing unit 202 is configured to parse the plurality of tokens to generate a parse tree. The processing unit 202 is configured to generate the parse tree by application of a parsing algorithm on the plurality of tokens. Examples of the parsing algorithm includes but is not limited to a Recursive Descent Parsing algorithm, a LL(k) parsing algorithm, and a LR(k) parsing algorithm.

The parse tree, as referred herein, is a hierarchical representation of a syntactic structure of the engineering program. The parse tree serves as a visual representation of how the plurality of tokens are arranged based on one or more grammatical rules of the engineering program.

The parse tree comprises a plurality of elements which are organized hierarchically. Each element of the parse tree corresponds to at least one token of the plurality of tokens. A root data element of the parse tree represents the engineering program. Other data elements of the parse tree comprises information associated with other information such as syntactic constructs, such as a plurality of expressions, a plurality of statements, or a plurality of declarations of the engineering program. The parse tree further comprises information associated with a plurality of symbols in the engineering program, including keywords, identifiers, and literals of the engineering program.

In a third step of the first set of steps, the processing unit 202 is configured to convert the parse tree into the abstract syntax tree. In one example, the processing unit 202 is configured to generate the abstract syntax tree by application of a tree traversal algorithm on the parse tree. The tree traversal algorithm is configured to traverse through the plurality of elements of the parse trees and generate corresponding node objects of the abstract syntax tree. Examples of the tree traversal algorithms include a visitor pattern traversal algorithm and a depth first traversal algorithm.

The automation module 112 further causes the processing unit 202 to determine a first value for a memory efficiency parameter associated with the engineering program by implementation of an efficiency determination procedure on the received engineering program.

The memory efficiency parameter as referred herein is a metric associated with the engineering program. The memory efficiency parameter gauges an optimal utilization of memory resources by assessing a degree of alignment between a bit size of data types assigned to the plurality of variables and an actual range of values which each of the plurality of variables are intended to handle. In one example, the processing unit 202 is configured to receive from one or more databases, information associated with the actual range of values which are intended to be handled by each variable of the plurality of variables. Advantageously, the processing unit 202 is configured to measure an efficiency with which the engineering program utilizes memory of the controller device.

To implement the efficiency determination procedure, the processing unit 202 is configured to execute a second set of steps. In a first step of the second set of steps, the processing unit 202 is configured to extract from the abstract syntax tree, information associated with a datatype of each variable of the plurality of variables of the engineering program. Examples of the plurality of datatypes include but is not limited to an INT datatype, a FLOAT datatype, a SINT datatype and a DINT datatype. Each node object of the plurality of node objects comprises information associated with datatype of one or more variables of the plurality of variables.

In a second step of the second set of steps, the processing unit 202 is configured to determine information associated with a range of values handled by each variable of the plurality of variables. The information associated with a range of values handled by each variable of the plurality of variables is stored in a mapping table in a database. The processing unit 202 is configured to receive the information associated with the range of values handled by each variable of the plurality of variables from the database. Each variable is associate with a specific range of values in the mapping table. For example, in the mapping table, a first variable associated with age is mapped to a first range of 0 to 100. A second variable associated with a room temperature is mapped to a second range of -50 to +50. A third variable associated with a number of passengers in a car is mapped to a third range of 0 to 8. Thus, the first variable handles values between 0 and 100. The second variable handles values between - 50 and 50. The third variable handles values between 0 and 8. The processing unit 202 is further configured to determine a bitsize of a datatype assigned to each variable of the plurality of variables. The processing unit 202 is configured to receive the bitsize of the datatype from the database.

In a third step of the second set of steps, the processing unit 202 is configured to determine a degree of alignment between the datatype associated with each variable of the plurality of variables and the range of values associated with the variable. In one example, the processing unit 202 is configured to receive, from the database, information associated with the number of bits required to represent all values in the range of values. To determine the degree of alignment, the processing unit 202 is configured to compare the bitsize of the datatype of the variable with the number of bits required to represent all values in the range of values associated with the variable. If the bitsize of the datatype of the variable is equal to the range of values associated with the variable, then the datatype assigned to the variable is aligned with the range of values of the variable.

In one example, a variable of the engineering program is designated to accommodate a range of values from 0 to 31. In a case where the variable is assigned a first data type with a bit size of 32, then a degree of alignment between the bit size of the at least one first datatype and the designated range of values is low. This is because only 5 bits suffice to accommodate values ranging from 0 to 31. Consequently, a presence of the variable in the engineering program causes the memory efficiency parameter of the engineering program to decrease. Conversely, if the variable, meant for values from 0 to 31, is assigned a second data type with a bit size of 5, then a degree of alignment between the at least one second datatype and the designated range of values, is high. Thus, a presence of the variable in the engineering program causes the memory efficiency parameter of the engineering program to increase. In this scenario, the memory efficiency parameter attains a high value, signifying an optimal match between the variable's intended range and the allocated bit size, contributing to enhanced memory utilization within the engineering program. Thus, in other words, the memory efficiency parameter is indicative of a degree of alignment between a plurality of datatypes of the plurality of variables and a range of values handled by each variable of the plurality of variables.

In a fourth step of the second set of steps, the processing unit 202 is configured to apply a machine learning model based algorithm on a dataset comprising the generated abstract syntax tree and a determined degree of alignment between a datatype of each variable of the plurality of variables and a range of values handled by the variable. The machine learning model based algorithm is applied to determine a first value of the memory efficiency parameter of the engineering program. The machine learning model based algorithm is configured to determine the memory efficiency parameter associated with the engineering program.

In one example, the machine learning model based algorithm uses an interpretable machine learning model which uses a local interpretable model-agnostic explanation technique to explain a plurality of predictions of the interpretable machine learning model. The interpretable machine learning model is configured to determine the memory efficiency parameter of the engineering program. Examples of the interpretable machine learning model include but is not limited to a regression model, a support vector machine, a random forest machine learning model, and a long term short term memory model.

The interpretable machine learning model is trained by application of a supervised learning algorithm on a training dataset. The training dataset comprises a plurality of data items and a plurality of labels associated with the plurality of data items. The plurality of data items comprises information associated with a plurality of variables, and a plurality of datatypes associated with each variable of the plurality of variables. Furthermore, the training dataset comprises a plurality of range of values associated with each variable of the plurality of variables. The plurality of data items further comprises information associated with a plurality of engineering programs. The plurality of engineering programs comprises information associated with domain expert reviewed engineering programs. The information associated with the plurality of engineering programs comprises a plurality of abstract syntax trees which are generated from the plurality of engineering programs. The plurality of abstract syntax trees are generated by the processing unit 202 by implementing the tree generation procedure on each engineering program of the plurality of engineering programs.

Domain expert-reviewed engineering programs refer to software code and algorithms which have undergone thorough scrutiny and evaluation by a plurality of professionals who have with specialized knowledge in one or more industrial domains. In the context of training the interpretable machine learning model, the plurality of professionals play a crucial role in ensuring a quality and an accuracy of the training dataset. The plurality of professionals perform careful examination of datatypes assigned to the plurality of variables and a range of values handled by the plurality of variables. By leveraging their expertise, the plurality of professionals contribute to the creation of a robust and comprehensive dataset that enables the interpretable machine learning modes to learn patterns associated with memory efficiency in the plurality of engineering programs. The plurality of engineering programs further comprises vendor specific engineering programs which are received from a user guide of one or more industrial devices in the industrial plant 106. Advantageously, the machine learning model is trained to determine the memory efficiency parameter based on the plurality of engineering programs.

The plurality of labels comprises information associated a degree of alignment of each variable of the plurality of variables and a datatype assigned to the specific variable. Furthermore, the plurality of labels comprises information associated with a plurality of value of the memory efficiency parameter associated with each engineering program of the plurality of engineering programs. Thus, the interpretable machine learning model is trained by application of the supervised learning algorithm on the training dataset. Thus, the machine learning model is configured to determine the first value for the memory efficiency parameter associated with the engineering program. Furthermore, the machine learning model based algorithm is configured to determine the memory efficiency parameter associated with the engineering program by processing the abstract syntax tree associated with the engineering program.

In a fifth step of the second set of steps, a first value of the memory efficiency parameter associated with the engineering program is determined by the processing unit 202 based on the application of the machine learning model based algorithm on the generated abstract syntax tree and further based on the determined degree of alignment between the datatype of each variable of the plurality of variables of the engineering program and a range of values handled by the variable. In one example, the first value of the memory efficiency parameter is represented as a numerical value between 1 to 10. In another example, the memory efficiency parameter is represented as a Boolean number such as 1 or 0. In such a case, if the memory efficiency parameter is 0, then the engineering program is inefficient. If the memory efficiency parameter is 1, then the engineering program is efficient. The first value, of the memory efficiency parameter of the engineering program, is indicative of a degree of alignment between a datatype of each variable of the plurality of variables of the engineering program and a range of values handled by the variable.

The automation module 112 further causes the processing unit 202 to modify the engineering program by changing a datatype of at least one variable from a at least first datatype to at least a second datatype by implementing a memory optimization procedure on the plurality of variables. To implement the memory optimization procedure on the plurality of variables, the processing unit 202 is configured to execute a third set of steps.

In a first step of the third set of steps, the processing unit 202 assigns each datatype, of a set of datatypes, to each variable of the plurality of variables. The set of datatypes comprises datatypes which are compatible with syntactic and semantic rules of the engineering program. The set of datatypes are selected and assorted by one or more domain experts.

In a second step of the third set of steps, the processing unit 202 generates a plurality of versions of the engineering program by changing at least one datatype of one or more variables of the plurality of variables. Thus, each version of the plurality of versions of the engineering program differ from other versions by a datatype associated with one or more variables in the engineering program.

In a third step of the third set of steps, the processing unit 202 generates a plurality of values of the memory efficiency parameter for the plurality of versions of the plurality of engineering programs. In other words, each value of the plurality of values of the memory efficiency parameter is determined based on a version of the engineering program in which a specific datatype is assigned to a specific variable of the plurality of variables.

In a fourth step of the third set of steps, the processing unit 202 generates a dataset which comprises a mapping between each version of the plurality of versions of the engineering program to one or more values of the plurality of values of the memory efficiency parameter. Thus, the processing unit 202 is configured to determine interrelationships between the plurality of values of the memory efficiency parameter, the plurality of variables of the engineering program, and the set of datatypes assigned to the plurality of variables. In other words, the processing unit 202 determines one or more variations which occur in the memory efficiency parameters of the engineering program, when a specific datatype of the set of datatypes is assigned to a specific variable of the plurality of variables of the engineering program.

In a fifth step of the third set of steps, the processing unit 202 determines a weightage for each variable of the plurality of variables based on the determined one or more variations in the plurality of values for the memory efficiency parameters, when different datatypes are assigned to the variable. The weightage assigned to each variable of the plurality of variables is indicative of an amount of variation in the memory efficiency parameter of the engineering program, when a datatype of the variable is changed. Thus, if the determined weightage for the variable is high, then the memory efficiency parameter of the engineering program varies rapidly with change in the datatype of the variable. Thus, if the determined weightage for the variable is low, then the memory efficiency parameter of the engineering program does not vary with change in the datatype of the variable. In one example, the weightage is assigned to the variable based on application of a standard deviation determination operation on the plurality of values of the memory efficiency parameter of the plurality of versions of the engineering program. For example, the weightage of the variable is proportional to a standard deviation of the plurality of values of the memory efficiecy parameter for a set of versions of the engineering program in which the variable is modified.

In a sixth step of the third set of steps, the processing unit 202 generates a plurality of weights for the plurality of variables by determining a weightage for each variable of the plurality of variables. In one example, the processing unit 202 is configured to rank the plurality of variables in an order of increasing weightages of the plurality of weightages.

In a seventh step of the third set of steps, the processing unit 202 is configured to determine at least one variable from the plurality of variables based on a weightage associated with the at least one variable. For example, the processing unit 202 is configured to determine the at least one variable which has a highest value of weightage from the plurality of weightages. Thus, the at least one variable is a variable which has a maximum impact on the memory efficiency parameter associated with the engineering program, when a datatype associated with the variable is changed. In one example, the selected at least one variable comprises a set of variables of the plurality of variables, which have a maximum impact on the memory efficiency parameter of the engineering program, when a datatype associated with each of the set of variables is changed.

In a eighth step of the third set of steps, the processing unit 202 is configured to determine at least one first datatype of the at least one variable from the abstract syntax tree.

In a ninth step of the third set of steps, the processing unit 202 is configured to determine, a range of values handled by the at least one variable by analyzing the abstract syntax tree of the engineering program. In one example, the range of values is received by the processing unit 202 from the database 118.

In a tenth step of the third set of steps, the processing unit 202 is configured to select from the set of datatypes, at least a second datatype. In one example, the at least one second datatype is selected based on a user input received from a user. In another example, the at least one second datatype is selected based on the plurality of values of the memory efficiency parameter. For example, the at least one second datatype is selected based on a value of the memory efficiency parameter of a version of the engineering program in which the at least one second datatype is assigned to the at least one variable of the plurality of variables. In one example, the value of the memory efficiency parameter of the version of the engineering program may be greater than a specific user defined threshold. In other words, assignment of the at least one second datatype to the at least one variable may increase the memory efficiency parameter above the specific user defined threshold. Advantageously, the at least one second datatype, which increases the memory efficiency parameter of the engineering program is selected from the set of dataypes.

In a eleventh step of the third set of steps, the processing unit 202 is configured to determine a bit size of the at least one second datatype. Furthermore, the processing unit 202 is configured to compare the bit size of the at least one second datatype with a number of bits required to represent the range of values handled by the at least one variable. The processing unit 202 is further configured to compare the bit size of the at least one second data type and the number of bits required to represent the range of values handled by the at least one variable.

In a twelveth step of the third set of steps, the processing unit 202 is configured to determine a degree of alignment of the at least one second datatype with the range of values associated with the at least one variable based on the comparison.

In a thirteenth step of the third set of steps, the processing unit 202 is configured to determine a degree of alignment between the at least one first datatype and the range of values associated with the at least one variable.

In an fourteenth step of the third set of steps, the processing unit 202 is configured to determine whether the degree of alignment of the at least one second datatype with a range of values associated with the at least one variable, is greater than a degree of alignment of the at least one first datatype with the range of values associated with the at least one variable.

In a case where the degree of alignment of the at least one second datatype is determined to be greater than the degree of alignment of the at least one first datatype, then, at a fifteenth step of the third set of steps, the datatype of the at least one variable is changed from the at least one first datatype to the at least one second datatype. Advantageously, the datatype of the at least one variable is only changed if it increases the memory efficiency parameter of the engineering program.

In a case where the degree of alignment of the at least one second datatype is not determined to be greater than the degree of alignment of the at least one first datatype, then, at the fifteenth step of the third set of steps, the datatype of the at least one variable is not changed from the at least one first datatype to the at least one second datatype.

In a sixteenth step of the third set of steps, the engineering program is modified based on the change of the datatype of the at least one variable from the at least one first datatype to the at least one second datatype.

The automation module 112 further causes the processing unit 202 to determine a second value for the memory efficiency parameter of the modified engineering program by implementation of the efficiency determination procedure on the modified engineering program. In one example, the second value of the memory efficiency parameter is determined by application of the machine learning model based algorithm on an abstract syntax tree of the modified engineering program.

The automation module 112 further causes the processing unit 202 to generate a simulation instance for a simulated execution of the modified engineering program in the controller device in the industrial plant 106. In one example, the simulation instance is a digital twin of the controller device in the industrial plant 106. The automation module 112 further causes the processing unit 202 to simulate execution of the modified engineering program in the controller device in a simulation environment by executing the modified engineering progam on the generated simulation instance. The automation module 112 further causes the processing unit 202 to determine whether the modified engineering program is valid, based on a result of the simulated execution of the modified engineering program. The automation module 112 further causes the processing unit 202 to deploy the modified engineering program in real-time onto the controller device, based on a determination that the generated engineering program is valid. Advantageously, the modified engineering program is only deployed onto controller device after the determination that the generated engineering program is valid. The automation module 112 further causes the processing unit 202 to display the modified engineering program on a display device. Advantageously, the user is enabled to document the generated engineering program.

The automation module 112 further causes the processing unit 202 to notify about an invalidity of the modified engineering program, based on a determination that the modified engineering program is invalid. Advantageously, the user is informed that the modified engineering program is invalid. Thus, the user is enabled to correct and troubleshoot the engineering program. The automation module 112 further causes the processing unit 202 to generate a plurality of error log files associated with the modified engineering program, based on the determination that the generated engineering program is valid. The plurality of error log files comprises a plurality of errors in the generated engineering programs. The plurality of errors are identified during the simulated execution of the modified engineering program. The automation module 112 further causes the processing unit 202 to display the generated plurality of error log files on a display device.

The automation module 112 further causes the processing unit 202 to generate a plurality of user recommendations to modify the engineering program. The plurality of user recommendations are generated based on the plurality of weightages determined for the plurality of variables. In one example, the plurality of user recommendations are indicative of one or more variables which may be changed to improve the memory efficiency parameter of the engineering program. The method further comprises displaying the plurality of use recommendations to a user.

The communication interface 208 is configured for establishing communication sessions between the one or more client devices 120A-N and the engineering system 102. The communication interface 208 allows the one or more engineering applications running on the client devices 120A-N to import/export engineering project files into the engineering system 102. In an embodiment, the communication interface 208 interacts with the interface at the one or more client devices 120A-N for allowing the engineers to access the engineering programs associated with an engineering project file and perform one or more actions on the engineering programs stored in the engineering system 102.

The input-output unit 210 may include input devices a keypad, touch-sensitive display, camera (such as a camera receiving gesture-based inputs), etc. capable of receiving one or more input signals, such as user commands to process engineering project file. Also, the input-output unit 210 may be a display unit for displaying a graphical user interface which visualizes the behavior model associated with the modified engineering programs and also displays the status information associated with each set of actions performed on the graphical user interface. The set of actions may include execution of predefined tests, download, compile and deploy of graphical programs. The bus 214 acts as interconnect between the processor 202, the memory 204, and the input-output unit 210.

The network interface 212 may be configured to handle network connectivity, bandwidth and network traffic between the engineering system 102, client devices 120A-N and the industrial plant 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an engineering system 102 as is unique to the present disclosure or necessary for an understanding of the present disclosure is depicted and described. The remainder of the construction and operation of the engineering system 102 may conform to any of the various current implementation and practices known in the art.

FIG 3 is a block diagram of an automation module 112, such as those shown in FIG 2, in which an embodiment of the present invention can be implemented. In FIG 3, the automation module 112 comprises a request handler module 302, an object behavior model generation module 304, an analysis module 306, a modifier module 308,an engineering object database 310, a validation module 312 and a deployment module 314. FIG. 3 is explained in conjunction with FIG. 1 and FIG. 2.

The request handler module 302 is configured for receiving the request to optimize the engineering program associated with an industrial domain of the industrial plant 106. For example, the request is received from one of the one or more users external to the industrial environment 100 via a network. In alternative embodiment, the request is received from the one or the one or more client devices 120A-N via the network. The request handler module 302 is further configured to determine the set of programming block associated with the industrial domain from the plurality of programming blocks associated with the set of industrial domains.

The object behavior model generation module 304 is configured for training the interpretable machine learning model which is configured to determine teh memory efficiency parameter of the engineering program.

The analysis module 306 is configured for analyzing the teh plurality of variables and the abstract syntax tree. Specifically, the analysis module 306 is configured for retrieving information associated with the set of datatypes and the range of values associated with each variable of the plurality of variables from the database 118.

The modifier module 308 is configured for modifying the engineering program by changing the datatype of the at least one variable from at least the first data type to the at least the at least one second datatype. The engineering program is modified based on the first value the memory efficiency parameter of the engineering program. The modifications comprise any changes such as addition, deletion, update, replacement or revision of the datatype of one or more variables of the plurality of variables of the engineering program.

The engineering object database 310 is configured for storing information associated with the plurality of variables, the set of datatypes, the plurality of versions of the engineering program.

The validation module 312 is configured to generate a simulation instance for simulated execution of the modified engineering program. In one example, the simulation instance is a digital twin of a controller device. The validation module 312 is configured to simulate execution of the modified engineering program in the controller device of the industrial plant 106 in a simulation environment by executing the modified engineering program. The validation module 312 is configured to determine that the modified engineering program is valid, based on a result of the simulated execution of the modified engineering program.

The deployment module 314 is configured for deploying the engineering program in real-time onto the controller device installed in the industrial plant 106 based on the validation. Advantageously, the modified engineering program is only deployed onto the controller device after the determination that the generated engineering program is valid.

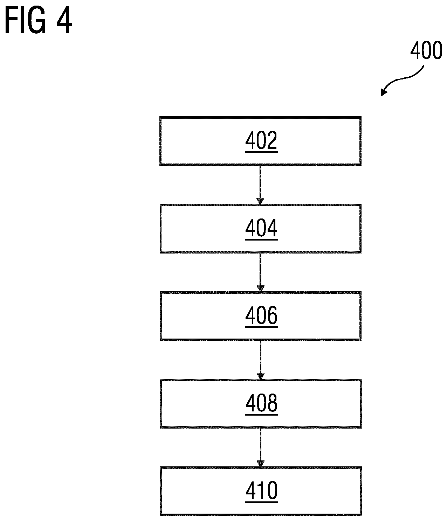

FIG 4 is a process flowchart illustrating an exemplary method 400 of optimizing engineering programs for a controller device of the industrial plant, according to an embodiment of the present invention.

At step 402, an engineering program associated with the industrial plant is received by the processing unit 202. The engineering program comprises a plurality of variables. At step 404, a first value is determined by the processing unit 202 for a memory efficiency parameter associated with the engineering program. The first value is determined by implementation of an efficiency determination procedure on the received engineering program. At step 406, the engineering program is modified by the processing unit 202 by changing a datatype of at least one variable of the plurality of variables from at least one first datatype to at least one second datatype. The datatype is changed by implementation of a memory optimization procedure on the plurality of variables. At 408, a second value for the memory efficiency parameter associated with the modified engineering program is determined by the processing unit. The second value is determined by implementation of the efficiency determination procedure on the modified engineering program. At step 410, the modified engineering program is deployed by the processing unit 202 to a controller device of the industrial plant based on the first value and the second value of the efficiency parameter.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

## Claims

1. A method of optimizing engineering programs for a controller device in an industrial plant, the method comprising:
receiving, by a processing unit (202), an engineering program associated with the industrial plant, wherein the engineering program comprises a plurality of variables;
determining, by the processing unit (202), a first value for a memory efficiency parameter associated with the engineering program by implementation of an efficiency determination procedure on the received engineering program;
modifying, by the processing unit (202), the engineering program by changing a datatype of at least one variable of the plurality of variables from at least one first datatype to at least one second datatype, wherein the datatype is changed by implementation of a memory optimization procedure on the plurality of variables;
determining, by the processing unit (202), a second value for the memory efficiency parameter associated with the modified engineering program by implementation of the efficiency determination procedure on the modified engineering program; and
deploying, by the processing unit (202), the modified engineering program to a controller device of the industrial plant based on the first value and the second value of the efficiency parameter.

2. The method according to claim 1, wherein the memory efficiency parameter is indicative of a degree of alignment between a datatype of the at least one variable of the plurality of variables and a range of values handled by the at least one variable.

3. The method according to claims 1 and 2, wherein determining the first value for the memory efficiency parameter associated with the engineering program comprises:
generating, by the processing unit (202), an abstract syntax tree by implementation of a tree generation procedure on the received engineering program, wherein the abstract syntax tree comprises information associated with the plurality of variables and the datatype associated with each variable of the plurality of variables;
applying, by the processing unit (202), a machine learning model based algorithm on the generated abstract syntax tree, wherein the machine learning model based algorithm is configured to determine the memory efficiency parameter associated with the engineering program; and
determining, by the processing unit (202), the first value of the memory efficiency parameter associated with the engineering program based on the application of the machine learning model based algorithm on the generated abstract syntax tree.

4. The method according to claim 3, wherein implementing the efficiency determination procedure on the engineering program comprises:
extracting, by the processing unit (202), from the abstract syntax tree, information associated with a datatype of each variable of the plurality of variables;
determining, by the processing unit (202), information associated with a range of values handled by each variable of the plurality of variables;
determining, by the processing unit (202), a degree of alignment between the datatype of each variable of the plurality of variables and a range of values handled by the variable; and
determining, by the processing unit (202), the memory efficiency parameter associated with the engineering program based on the determined degree of alignment between the datatype of each variable of the plurality of variables of the engineering program and a range of values handled by the variable.

5. The method according to claim 4, wherein modifying the engineering program by changing the datatype of the at least one variable of the plurality of variables comprises:
determining whether, a degree of alignment of the at least one second datatype with a range of values associated with the at least one variable, is greater than a degree of alignment of the at least one first datatype with the range of values associated with the at least one variable; and
modifying the engineering program by changing the datatype of the at least one variable from the at least one first datatype to the at least one second datatype, wherein the datatype of the at least one variable is changed when the determined degree of alignment of the at least one second datatype is determined to be greater than the determined degree of alignment of the at least one first datatype.

6. The method according to claims 4 and 5, wherein the machine learning model based algorithm comprises an interpretable machine learning model.

7. The method according to claim 1, implementing the memory optimization procedure on the plurality of variables comprises:
assigning, by the processing unit (202), to each variable of the plurality of variables, each datatype of a set of datatypes;
determining, by the processing unit (202), a plurality of values for the memory efficiency parameter of the engineering program, wherein each value of the plurality of values of the engineering program is determined based on a version of the engineering program in which a specific datatype is assigned to a specific variable of the plurality of variables;
generating a plurality of weightages for the plurality of variables by determining a weightage for each variable of the plurality of variables, wherein the weightage for each variable is determined based on one or more values of the plurality of values of the memory efficiency parameter which are determined based on the variable;
determining, by the processing unit (202), the at least one variable from the plurality of variables, wherein a weightage determined for the at least one variable has highest value among a plurality of weightages; and
modifying, by the processing unit (202), the engineering program by changing the datatype of the determined at least one variable from the at least one first datatype to the at least one second datatype.

8. The method according to claims 1 and 7, further comprising:
generating, by the processing unit (202), a plurality of user recommendations based on the plurality of weightages determined for the plurality of variables; and
displaying, by the processing unit (202), the generated plurality of user recommendations to a user.

9. The method according to claim 1, further comprising:
generating, by the processing unit (202), a simulation instance for the modified engineering program; and
simulating, by the processing unit (202), execution of the modified engineering program in a simulation environment.

10. The method according to claims 1 and 8, wherein deploying the modified engineering program to the controller device of the industrial plant comprises:
determining, by the processing unit (202), whether the modified engineering program is valid, based on a result of the simulated execution of the modified engineering program;
deploying, by the processing unit (202), the modified engineering program in real-time onto the controller device, based on a determination that the generated engineering program is valid; and
displaying, by the processing unit, the modified engineering program on a display device.

11. An engineering system for optimizing engineering programs for a controller device in an industrial plant, wherein the engineering system comprises:
one or more processor(s) (202); and
a memory (204) coupled to the one or more processor(s), wherein the memory comprises an automation module stored in the form of machine-readable instructions executable by the one or more processor(s), wherein the automation module (112) is capable of performing a method according to any of the claims 1-10.

12. An industrial environment (100) comprising:
an engineering system (102) as claimed in claim 11;
a industrial plant (106) comprising one or more physical components; and
one or more client devices (120A-N) communicatively coupled to the engineering system (102) via a network (104), wherein the engineering system (102) is configured to perform a method according to any of the claims 1 to 10.

13. A computer-program product, having machine-readable instructions stored therein, that when executed by a processor(s) (202), cause the processors to perform a method according to any of the claims 1-10.
